# EUROPÄISCHE PATENTSCHRIFT

(11) **EP 1 763 553 B1**
(45) Veröffentlichungstag und Bekanntmachung des Hinweises auf die Patenterteilung: **05.12.2007**
(21) Anmeldenummer: 05750071.2
(22) Anmeldetag: 18.05.2005
(51) Int. Cl.: C08J 3/12, C04B 24/26, C04B 26/04, C08J 3/05

(54) **VERWENDUNG VON VINYLCHLORID-ETHYLEN-MISCHPOLYMERISATEN ZUR HYDROPHOBIERUNG VON BAUSTOFFMASSEN**
USE OF VINYL CHLORIDE-ETHYLENE COPOLYMERS FOR HYDROPHOBING CONSTRUCTION SUBSTANCES
UTILISATION DE COPOLYMERES DE CHLORURE DE VINYLE-ETHYLENE POUR RENDRE HYDROPHOBES DES MATIERES DE CONSTRUCTION

(30) Priorität: 01.06.2004 DE 102004026610
(43) Veröffentlichungstag der Anmeldung: 21.03.2007
(73) Patentinhaber: Wacker Polymer Systems GmbH & Co. KG, 84489 Burghausen (DE)
(72) Erfinder: WEITZEL, Hans-Peter, 84571 Reischach (DE); LUTZ, Hermann, 84547 Emmerting (DE)
(74) Vertreter: Schuderer, Michael
(86) Internationale Anmeldenummer: PCT/EP2005/005414
(87) Internationale Veröffentlichungsnummer: WO 2005/118684

(56) Entgegenhaltungen:
- EP-A- 0 149 098
- EP-A- 1 394 198
- WO-A-02/31036
- WO-A-97/18175
- DE-A1- 19 921 876
- DE-C1- 19 901 307
- DATABASE CA [Online] CHEMICAL ABSTRACTS SERVICE, COLUMBUS, OHIO, US; 28. Januar 2003 (2003-01-28), ZHANG, JIE: "Long term performance of redispersible emulsion powder in mortars" XP002338490 gefunden im STN Database accession no. 2003:63727 & HUAXUE JIANCAI , 18(4), 35-38 CODEN: HUJIFL; ISSN: 1004-1672, 2002,

## Beschreibung

Die Erfindung betrifft die Verwendung von Vinylchlorid-Ethylen-Mischpolymerisaten zur Hydrophobierung von Baustoffmassen, insbesondere für Oberflächenbeschichtungsstoffe wie Skim Coats, Monocouche-Coatings und Fugenfüller.

Polymerisate auf Basis von Vinylester, Vinylchlorid, (Meth)acrylatmonomeren, Styrol, Butadien und Ethylen werden vor allem in Form deren wässriger Dispersionen oder in Wasser redispergierbarer Polymerpulver in vielerlei Anwendungen, beispielsweise als Beschichtungsmittel oder Klebemittel für die unterschiedlichsten Substrate eingesetzt. Zur Stabilisierung dieser Polymerisate werden Schutzkolloide oder niedermolekulare, oberflächenaktive Verbindungen eingesetzt. Als Schutzkolloide werden in der Regel Polyvinylalkohole eingesetzt. Diese Produkte finden insbesondere Verwendung als Bindemittel in hydraulisch abbindenden Klebstoffen wie z.B. Fliesenklebern, Putzen oder Ausgleichsmassen auf Basis von Zementen oder Gipsen.

Skim Coats bzw. Monocouche sowie Fugenfüller sind jeweils Anwendungen, die sehr hohe Ansprüche an die Wasserbeständigkeit bzw. Wasserabweisung der fertigen Bauteile stellen. Unter Skim coats versteht man dabei sehr dünne Oberputze oder Glättspachtelauftragungen mit einer Dicke von im allgemeinen 1 bis 2 mm. Als Monocouche bezeichnet man einlagige Putze, welche gleichzeitig Dekorputze sind. Um den für diese Anwendungen geforderten Anforderungen bezüglich Wasserabweisung gerecht zu werden, müssen die Rezepturen entsprechend hydrophob modifiziert werden.

Aus der DE-A 2341085, der EP-A 342609, der EP-A 717016 sowie der EP-A 1193287 ist bekannt, kalk- oder zementgebundenen Putzen Fettsäureester als Hydrophobierungsmittel zuzugeben. Nachteilig ist dabei oft gerade der hydrophobierende Charakter dieser Zusatzstoffe. Werden Trockenputze, welche solche Hydrophobierungsmittel enthalten, mit Wasser angerührt, führt dies dazu, dass sich die Materialien nur mehr schlecht benetzen, und deshalb die Verarbeitbarkeit deutlich verschlechtert wird.

In Wasser redispergierbare Pulver auf der Basis von Homo- oder Copolymerisaten von ethylenisch ungesättigten Monomeren werden im Baubereich als Bindemittel, in Kombination mit hydraulisch abbindenden Bindemitteln wie Zement, eingesetzt. Beispielsweise dienen diese in Bauklebern, Putzen, Mörteln und Farben der Verbesserung der mechanischen Festigkeit und der Haftung. Aus der WO-A 95/20627, der WO-A 02/31036 und der DE-A 10233933 ist bekannt, hydrophobierend wirkende Additive wie Organosiliciumverbindungen und Fettsäureester als Bestandteil von Redispersionspulvern in Trockenmörteln einzusetzen. Auch aus der EP-A 1394198 ist bekannt, hydrophob modifizierte Polymerzusammensetzungen enthaltend Polymerisate auf Basis ethylenisch ungesättigter Monomere und hydrophobierend wirkender Additive wie Organosiliziumverbindung oder Fettsäuren bzw. Fettsäurederivate in bauchemischen Produkten einzusetzen. Damit wird die Problematik der schlechten Benetzbarkeit und Verarbeitbarkeit umgangen. Der hydrophobierende Effekt ist aber abhängig von dem Anteil des Hydrophobierungsmittels im Redispersionspulver und kann daher nicht beliebig variiert werden.

Aus der EP-A 149098 und der EP-A 224169 ist bekannt, Vinylchlorid-Ethylen-Copolymere als Zusatz in hydraulisch abbindenden Massen einzusetzen, um deren mechanische Festigkeit, insbesondere Druckfestigkeit, Abriebsbeständigkeit, Biegezug- und Haftzugfestigkeit zu verbessern.

Aufgabe war es, eine Polymerzusammensetzung in Form deren wässrigen Dispersion oder in Form deren in Wasser redispergierbarem Pulver zur Verfügung zu stellen, welche geeignet ist für den Einsatz in Baustoffmassen, für die eine sehr hohe wasserabweisende Wirkung gefordert ist. Für Fugenfüller, vergütet mit 1 Gew.-% Polymer, bezogen auf Trockenmasse, sollte die Wasseraufnahme gemäß EN 12808 nach 3 Stunden ≤ 5 ml betragen. Bei skim-coat Putzen, vergütet mit 1 Gew.-% Polymer, bezogen auf Trockenmasse,, soll die Wasseraufnahme bestimmt nach Karsten ≤ 2 ml nach 300 min sein.

Gegenstand der Erfindung ist die Verwendung von Polymer-Zusammensetzungen in Form deren wässrigen Dispersion oder in Form deren in Wasser redispergierbarem Pulver zur Hydrophobierung von Baustoffmassen enthaltend
a) ein Vinylchlorid-Ethylen-Mischpolymerisat bestehend aus bis zu 95 Gew.-% Vinylchlorid-Einheiten und 5 bis 30 Gew.-% Ethylen-Einheiten und
b) 5 bis 30 Gew.-% eines oder mehrerer Schutzkolloide, sowie
c) in Pulverform noch 5 bis 30 Gew.-% von einem oder mehreren Antiblockmittel, sowie
gegebenenfalls weitere Additive,
wobei sich die Angaben in Gew.-% auf das Gesamtgewicht der Polymerpulver-Zusammensetzung beziehen und sich jeweils auf 100 Gew.-% aufaddieren.

Das Vinylchlorid-Ethylen-Mischpolymerisat enthält vorzugsweise 50 bis 95 Gew.-% Vinylchlorid-Einheiten, 5 bis 30 Gew.-% Ethylen-Einheiten, besonders bevorzugt 75 bis 90 Gew.-% Vinylchlorid-Einheiten, 10 bis 25 Gew.-% Ethylen-Einheiten, jeweils bezogen auf das Gesamtgewicht des Mischpolymerisats.

Gegebenenfalls können noch bis zu 20 Gew.-% weiterer Comonomere copolymerisiert sein. Beispiele hierfür sind Monomeren aus der Gruppe umfassend Vinylester, (Meth)acrylsäureester, Vinylaromaten. Geeignete Vinylester sind solche von Carbonsäuren mit 1 bis 12 C-Atomen. Bevorzugt werden Vinylacetat, 1-Methylvinylacetat, Vinylester von α-verzweigten Monocarbonsäuren mit 9 bis 11 C-Atomen, beispielsweise VeoVa9^{R} oder VeoVa10^{R} (Handelsnamen der Firma Resolution). Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, n-Butylacrylat, t-Butylacrylat und 2-Ethylhexylacrylat. Als Vinylaromaten bevorzugt ist Styrol Gegebenenfalls können noch 0.1 bis 5 Gew.-%, bezogen auf das Gesamtgewicht des Monomergemisches, Hilfsmonomere copolymerisiert werden. Bevorzugt werden ethylenisch ungesättigte Mono- und Dicarbonsäuren wie Acrylsäure, Methacrylsäure; ethylenisch ungesättigte Carbonsäureamide und - nitrile wie Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise N-Methylolacrylamid (NMA), Alkylether wie der Isobutoxy-ether oder Ester des N-Methylolacrylamids. Weitere Beispiele sind siliciumfunktionelle Comonomere, wie (Meth)acryloxypropyltri(alkoxy)-Silane.

Am meisten bevorzugt werden Vinylchlorid-Ethylen-Copolymerisate, ohne weitere Comonomereinheiten.

Geeignete Schutzkolloide sind wasserlösliche Polymere aus der Gruppe umfassend teilverseifte und vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly (meth) acrylsäure, Copolymerisate von (Meth)-acrylaten mit carboxylfunktionellen Comonomereinheiten, Poly-(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas, vorzugsweise 3 bis 15 mPas (Methode nach Höppler bei 20°C, DIN 53015).

Bevorzugt sind auch teilverseifte oder vollverseifte, hydrophob modifizierte Polyvinylalkohole mit einem Hydrolysegrad von 80 bis 100 Mol-% und einer Höpplerviskosität, in 4 %-iger wässriger Lösung, von 1 bis 30 mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethen, Propen und Decen. Der Anteil der hydrophoben Einheiten beträgt vorzugsweise 0.1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol-%. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015), sowie teilverseifte oder vollverseifte Copolymerisate von Vinylacetat mit Isopropenylacetat mit einem Hydrolysegrad von 95 bis 100 Mol-%. Die genannten Polyvinylalkohole sind mittels dem Fachmann bekannter Verfahren zugänglich.

Geeignete Antiblockmittel c) sind Ca-Carbonat, Mg-Carbonat, Talk, Gips, gemahlene Tone, Kaoline wie Metakaolin sowie feingemahlene Aluminiumsilikate, Kieselgur, kolloidales Silikagel, pyrogen erzeugtes Siliciumdioxid, jeweils mit Teilchengrößen vorzugsweise im Bereich von 10 nm bis 10 µm.

Weitere Additive, welche optional eingesetzt werden können, sind vorzugsweise hydrophobierend wirkende Additive d). Beispiele hierfür sind Additive d1), das sind Fettsäuren und Fettsäurederivate, die unter alkalischen Bedingungen Fettsäure oder das entsprechende Fettsäureanion freisetzen, und/oder Additive d2), das sind Organosilicium-Verbindungen. Im allgemeinen wird die Komponente d) in einer Menge von 1 bis 20 Gew.-%, vorzugsweise 1 bis 10 Gew.-%, jeweils bezogen auf das Gesamtgewicht der Polymer-Zusammensetzung, eingesetzt.

Als Komponente d1) geeignet sind allgemein Fettsäuren und Fettsäurederivate, die unter alkalischen Bedingungen, vorzugsweise pH > 8, Fettsäure bzw. das entsprechende Fettsäureanion freisetzen. Bevorzugt werden Fettsäureverbindungen aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Geeignete Metallseifen sind die der obengenannten Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Bevorzugt werden Metallseifen mit Lithium, Natrium, Kalium, Magnesium, Calcium, Aluminium, Zink, und den Ammoniumverbindungen.

Geeignete Fettsäureamide sind die mit Mono- oder Diethanolamin und den obengenannten C₈- bis C₂₂-Fettsäuren erhältlichen Fettsäureamide.

Als Komponente d1) geeignete Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester. Geeignete Fettsäureester sind auch die Mono-, Di- und Polyglykolester der C₈- bis C₂₂-Fettsäuren. Weitere geeignete Fettsäureester sind die Mono- und Diester von Polyglykolen und/oder Polyalkylenglykolen mit bis zu 20 Oxyalkylen-Einheiten, wie Polyethylenglykol und Polypropylenglykol.
Geeignet sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren. Geeignet sind auch die Fettsäureester von Sorbit und Mannit.

Besonders bevorzugt sind die C₁- bis C₁₄-Alkylester und -Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Als Komponente d2) geeignet sind Kieselsäureester Si(OR')₄, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si(SiR₂)ₙSiR₃ mit n = 0 bis 500, Organosilanole SiRₙ(OH)₄₋ₙ, Di-, Oligo- und Polysiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann. Geeignet sind auch Carbosilane, Polycarbosilane, Carbosiloxane, Polycarbosiloxane, Polysilylendisiloxane.

Bevorzugt als Komponente d2) sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan- und Methylhydrogensiloxan-Einheiten, Dimethylpolysiloxane, sowie Dimethylpolysiloxane mit Si-OH-Gruppen in den endständigen Einheiten. Am meisten bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan.

Die Herstellung der Polymer-Zusammensetzung erfolgt in an sich bekannter Art und Weise mittels radikalisch initiierte Emulsionspolymerisation in wässrigem Medium, und anschließender Sprühtrocknung der damit erhaltenen wässrigen Polymerdispersion. Geeignet ist beispielsweise das in der EP-A 149098 beschriebene Verfahren. Die Emulsionspolymerisation wird in Gegenwart von Schutzkolloid und/oder Emulgator durchgeführt. Vorzugsweise wird ausschließlich mit Schutzkolloid stabilisiert.
Die damit erhältlichen wässrigen Polymerdispersionen haben im allgemeinen einen Festgehalt von 25 bis 70 Gew.-%, vorzugsweise von 45 bis 65 Gew.-%.

Zur Herstellung von in Wasser redispergierbaren Polymerpulvern werden die wässrigen Dispersionen getrocknet, beispielsweise mittels Sprühtrocknung. Die Sprühtrocknung erfolgt im allgemeinen nach Zugabe von weiterem Schutzkolloid als Verdüsungshilfe. Die Zugabe des Antiblockmittels c) erfolgt vorzugsweise solange das Pulver noch im Trocknungsgas suspendiert ist. Falls das Pulver noch weitere Additive d) enthält, werden diese vor, während oder nach der Sprühtrocknung zugegeben. Bevorzugt erfolgt die Zugabe der Additive d) zur Polymerdispersion, im Falle von Redispersionspulvern vor deren Sprühtrocknung.

Die Polymer-Zusammensetzungen auf der Basis von Vinylchlorid-Ethylen-Mischpolymerisaten eignen sich zur Hydrophobierung von hydraulisch abbindenden Baustoffmassen. Vorzugsweise in Anwendungen, welche eine sehr hohe Hydrophobizität verlangen.

Solche Anwendungen sind insbesondere einlagige Beschichtungen (Putze) wie Skim Coats oder Monocouche, aber auch Fugenfüller. Unter Skim Coats versteht man dabei sehr dünne Oberputze oder Glättspachtelauftragungen mit einer Dicke von im allgemeinen 1 bis 3 mm. Als Monocouche bezeichnet man einlagige Putze, welche gleichzeitig Dekorputze sind. Vorzugsweise beträgt bei Fugenfüllern die Wasseraufnahme gemäß EN 12808 nach 3 Stunden ≤ 5 ml. Bei Putzbeschichtungen soll die Wasseraufnahme bestimmt nach Karsten ≤ 2 ml nach 300 min sein, jeweils in Rezepturen mit 1 Gew.-% Polymer bezogen auf Trockenmasse der Rezeptur.

Typische Rezepturen für Trockenmörtel sind dem Fachmann bekannt. Sie enthalten 5 bis 50 Gew.-% mineralisches Bindemittel, 5 bis 80 Gew.-% Füllstoff, 0.1 bis 10 Gew.-% Polymer, 0 bis 30 Gew.-% weitere Zusatzstoffe, wobei sich die Angaben in Gew.-% in der Rezeptur auf 100 Gew.-% aufaddieren. Geeignete mineralische Bindemittel sind Zement, Gips, Wasserglas oder Kalkhydrat. Beispiele für einsetzbare Füllstoffe sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Lehm und Tone;
Quarzmehl, Quarzsand, hochdisperse Kieselsäure, Feldspat, Schwerspat und Leichtspat. Geeignet sind auch Faserfüllstoffe. In der Praxis werden häufig Gemische verschiedener Füllstoffe eingesetzt.

Beispiele für weitere Zusatzstoffe sind Pigmente,beispielsweise Titandioxid als anorganisches Pigment, sowie die gebräuchlichen organischen Pigmente. Beispiele für weitere Zusatzstoffe sind Netzmittel in Anteilen von im allgemeinen 0.1 bis 0.5 Gew.-%, bezogen auf das Gesamtgewicht der Rezeptur. Beispiele hierfür sind Natrium- und Kaliumpolyphosphate, Polyacrylsäuren und deren Salze. Als Zusatzstoffe sind auch Verdickungsmittel zu nennen, welche im allgemeinen in einer Menge von 0.01 bis 2.0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Luftporenbildner, Verflüssiger, Verzögerer, Beschleuniger, Gefrierschutzmittel.

Zur Herstellung der anwendungsfertigen Baustoffmassen wird der mit dem Redispersionspulver vergütete Trockenmörtel an der Baustelle mit der erforderlichen Menge Wasser angerührt. Trockenmörtel können auch auf der Baustelle durch Zugabe der wässrigen, gegebenenfalls verdünnten, Polymerdispersionen vergütet werden.

Die nachfolgenden Beispiele dienen der weiteren Erläuterung der Erfindung:
Dispersion:
   Als Dispersion wurde eine wässrige, polyvinylalkoholstabilisierte Dispersion eines Copolymeren aus Vinylchlorid und Ethylen verwendet. Die Herstellung erfolgte mittels Emulsionspolymerisation. Zur Stabilisierung wurden 10 Gew.-% eines Polyvinylalkohols mit einem Verseifungsgrad von 88 Mol-% und einer Viskosität nach Höppler von 4 mPas verwendet. Die Copolymerzusammensetzung betrug 80 Gew.-% Vinylchlorid und 20 Gew.-% Ethylen.
   Die Dispersion enthielt als weitere Komponente 0 Gew.-% (Dispersion 1), 5 Gew.-% (Dispersion 2) oder 10 Gew.-% (Dispersion 3) Dodecansäuremethylester (DME) auf Trockengewicht.
Pulver:
   Die Pulver wurden mittels Sprühtrocknung der genannten Dispersionen, in Gegenwart von jeweils 10 Gew.% eines Polyvinylalkohols mit einem Verseifungsgrad von 88 Mol-% und einer Viskosität nach Höppler von 13 mPas hergestellt, wobei in den in der Tabelle 1 angegebenen Beispielen zusätzlich noch Isooctyltriethoxysilan (IOTS) und ggfls. Dodecansäuremethylester (DME) mitverdüst worden ist.
   Die Dispersion wurde mittels Zweistoffdüse versprüht. Als Verdüsungskomponente diente auf 4 bar vorgepreßte Luft, die gebildeten Tropfen wurden mit auf 125°C erhitzter Luft im Gleichstrom getrocknet. Das erhaltene trockene Pulver wurde mit 10 Gew.-% handelsüblichem Antiblockmittel (Gemisch aus Calcium-Magnesium-Carbonat und Magnesiumhydrosilikat) versetzt.

### Beispiel 8:

Redispersionspulver basierend auf einem Copolymer Vinylchlorid/Vinylacetat/Ethylen mit Tg ca. 10°C und zusätzlich Isooctyltriethoxysilan als hydrophobierendem Additiv.

### Vergleichsbeispiel V1:

Redispersionspulver basierend auf einem Copolymer Vinylacetat/VeoVa10/Butylacrylat mit Tg ca. 15°C und zusätzlich Dodecansäuremethylester als hydrophobierendem Additiv.

**Tabelle 1:**

| Beispiel | Dispersion | DME (Gew.-%) | IOTS (Gew.-%) |
|---|---|---|---|
| | | | |
| 1 | 1 | 0 | 4 |
| 2 | 1 | 2 | 4 |
| 3 | 2 | 0 | 4 |
| 4 | 2 | 2 | 4 |
| 5 | 3 | 0 | 4 |
| 6 | 3 | 2 | 4 |
| 7 | 1 | 0 | 0 |
| 8 | | | 4 |
| V1 | | 2 | |

### Ausprüfung einer Skim-Coat-Rezeptur:

### Formulierung 1 (Skim Coat):

| | |
|---|---|
| Portlandzement 42,5 | 300.0 Gew.-Teile |
| Calciumcarbonat | 700.0 Gew.-Teile |
| Celluloseether | 2.5 Gew.-Teile |
| Redispersionspulver | 10.0 Gew.-Teile |
| | |
| Summe | 1012.5 Gew.-Teile |
| Wasserbedarf | 38.0 Gew.-Teile |

### Bestimmung der Wasseraufnahme nach Karsten:

Gemessen wurde hierbei die Wasseraufnahme WA des Probekörpers in ml nach bestimmten Zeiten (in min). Dazu wird ein Glasröhrchen nach Karstens mit einem geeigneten Kitt auf dem zu prüfenden Untergrund wie in DIN EN 1323 beschrieben verklebt. Nach Befüllen des Wasserröhrchens wird vom Untergrund absorbierte Wassermenge in bestimmte Zeitabständen bestimmt. Je höher der Wert umso schlechter ist der Probekörper hydrophobiert.

### Prüfung der Haftzugfestigkeit:

Zur Prüfung der Haftung am Untergrund wurden der Mörtel mit einer Schablone (50 mm Durchmesser, 10 mm Dicke) auf eine Betonplatte aufgetragen. Nach der Erhärtung des Mörtels wurden nach 27 Tagen mit Epoxidharzklebstoff Metallzuganker auf die zu prüfenden Mörtelschicht aufgeklebt um die Haftzugprüfung durchzuführen.
Die Haftzugswerte wurden jeweils nach einer Lagerung von 14 Tage bei 23°C und 50 % Luftfeuchte mit einem Abzugsgerät der Firma Herion mit einer Laststeigerungsrate von 250 N/s geprüft. Die Meßwerte in N/mm² stellen Mittelwerte aus 5 Messungen dar.

**Tabelle 2:**

| Beispiel | WA 10' | WA 30' | WA 60' | WA 120' | WA 180' | WA 240' | WA 300' | HZ N/mm² |
|---|---|---|---|---|---|---|---|---|
| | | | | | | | | |
| 1 | 0.1 | 0.25 | 0.5 | 0.65 | 0.9 | 1.15 | 1.45 | 0.65 |
| 2 | 0.15 | 0.3 | 0.55 | 0.75 | 0.95 | 1.25 | 1.55 | 0.74 |
| 3 | 0.1 | 0.2 | 0.45 | 0.6 | 0.85 | 1.05 | 1.35 | 0.78 |
| 4 | 0.1 | 0.25 | 0.45 | 0.65 | 0.9 | 1.15 | 1.45 | 0.85 |
| 5 | 0.1 | 0.2 | 0.35 | 0.6 | 0.8 | 1.05 | 1.15 | 0.8 |
| 6 | 0.1 | 0.2 | 0.4 | 0.65 | 0.85 | 1.05 | 1.25 | 0.97 |
| 7 | 0.15 | 0.3 | 0.60 | 0.80 | 1.0 | 1.35 | 1.85 | 0.78 |
| 8 | 0.1 | 0.3 | 0.55 | 0.85 | 1.1 | 1.45 | 1.90 | 0.75 |
| V1 | 0.2 | 0.45 | 0.65 | 1.05 | 1.25 | 1.65 | 2.05 | 0.73 |

### Ausprüfung einer Fugenfüller-Rezeptur:

### Formulierung 2 (Fugenfüller):

| | |
|---|---|
| Portlandzement CEM I 42,5 | 340.0 Gew.-Teile |
| Sand | 649.5 Gew.-Teile |
| Celluloseether | 0.5 Gew.-Teile |
| Redispersionspulver | 10.0 Gew.-Teile |
| | |
| Summe | 1000.0 Gew.-Teile |
| Wasserbedarf | 22.0 Gew.-Teile |

Bestimmung der Wasseraufnahme für Fugenfüller nach DIN EN 12808:
Bestimmt wird die Wasseraufnahme in g nach bestimmten Zeiten an einem 28 Tage bei Normklima vorgelagerten und an den Seitenflächen wasserdicht versiegelten 8 x 4 x 4 cm Mörtelprisma.
Je höher der Wert, umso schlechter ist der Probekörper hydrophobiert.

Die Bestimmung der Verarbeitungseigenschaften erfolgt qualitativ durch den Verarbeiter.

### Prüfung der Biegezugfestigkeit (BF):

Zur Prüfung der Biegezugfestigkeit in Anlehnung an DIN 18555 wurden mit den verschiedenen Mörteln 16 x 4 x 4 cm Prismen hergestellt, welche vor der Prüfung 28 Tage im Normklima gelagert wurden.

### Prüfung der Druckfestigkeit (DF):

Zur Prüfung der Druckfestigkeit in Anlehnung an DIN 18555 wurden mit den verschiedenen Mörteln 16 x 4 x 4 cm Prismen hergestellt, welche vor der Prüfung 28 Tage im Normklima gelagert wurden.

### Prüfung der Abriebfestigkeit (AF):

Die Abriebsbeständigkeit wird nach EN 12808 bzw. EN ISO 10545-6 bestimmt. Dabei wirkt eine rotierende Stahlscheibe unter definiertem Druck und Aufbringen von Schleifmittel auf den Prüfkörper ein. Nach 50 Umdrehungen der Stahlsscheibe wird der Abrieb des Probekörpers in mm³ angegeben. Je höher der Wert um so geringer die Abriebsbeständigkeit.

**Tabelle 3:**

| Bsp. | Verarbeitung | WA (30') [ml] | WA (360') [ml] | BZ [N/mm²] | DF [N/mm²] | Härte | AF (mm³) |
|---|---|---|---|---|---|---|---|
| | | | | | | | |
| 1 | gut | 1.41 | 2.92 | 2.75 | 8.39 | gut | 1365 |
| 2 | gut | 0.45 | 1.33 | 2.67 | 7.95 | gut | 1280 |
| 3 | gut | 1.45 | 2.7 | 2.47 | 9.34 | gut | 1260 |
| 4 | gut | 0.38 | 1.28 | 2.61 | 7.78 | gut | 1195 |
| 5 | gut | 1.24 | 2.81 | 2.96 | 10.39 | gut | 1380 |
| 6 | gut | 0.31 | 1.12 | 2.46 | 7.52 | gut | 1232 |
| 7 | gut | 1.50 | 3.1 | 2.53 | 7.45 | gut | 1215 |
| 8 | gut | 0.91 | 3.3 | 2.24 | 6.84 | gut | 1556 |
| V1 | gut | 1.35 | 3.6 | 2.35 | 7.25 | gut | 1450 |

### Diskussion der Ergebnisse:

Aus den Daten ist zu erkennen, dass die erfindungsgemäßen Skim Coats bzw. Fugenmassen deutlich geringere Wasseraufnahmewerte aufweisen, bei mindestens gleichwertigen oder sogar verbesserten mechanischen Werten.

## Patentansprüche

1. Verwendung von Polymer-Zusammensetzungen in Form deren wässrigen Dispersion oder in Form deren in Wasser redispergierbarem Pulver zur Hydrophobierung von Baustoffmassen enthaltend
a) ein Vinylchlorid-Ethylen-Mischpolymerisat bestehend aus bis zu 95 Gew.-% Vinylchlorid-Einheiten und 5 bis 30 Gew.-% Ethylen-Einheiten und
b) 5 bis 30 Gew.-% eines oder mehrerer Schutzkolloide, sowie
c) in Pulverform noch 5 bis 30 Gew.-% von einem oder mehreren Antiblockmittel, sowie
gegebenenfalls weitere Additive,
wobei sich die Angaben in Gew.-% auf das Gesamtgewicht der Polymerpulver-Zusammensetzung beziehen und sich jeweils auf 100 Gew.-% aufaddieren.

2. Verwendung nach Anspruch 1, **dadurch gekennzeichnet, dass** als Schutzkolloid b) eine oder mehrere enthalten sind, aus der Gruppe umfassend teilverseifte Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN S3015), sowie teilverseifte oder vollverseifte Copolymerisate von Vinylacetat mit Isopropenylacetat mit einem Hydrolysegrad von 95 bis 100 Mol-%.

3. Verwendung nach Anspruch 1 bis 2, **dadurch gekennzeichnet, dass** als weitere Additive ein oder mehrere enthalten sind, aus der Gruppe umfassend d1) Fettsäuren und Fettsäurederivate, die unter alkalischen Bedingungen Fettsäure oder das entsprechende Fettsäureanion freisetzen, und d2) Organosilicium-Verbindungen.

4. Verwendung nach Anspruch 3, **dadurch gekennzeichnet, dass** als Komponente d1) ein oder mehrere Fettsäureverbindungen enthalten sind aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

5. Verwendung nach Anspruch 3, **dadurch gekennzeichnet, dass** als Komponente d2) ein oder mehrere Siliciumverbindungen enthalten sind aus der Gruppe der Kieselsäureester, Silane, Polysilane, Organosilanole, Di-, Oligo- und Polysiloxane.

6. Verwendung nach Anspruch 1 bis 5 in einlagigen Beschichtungen wie Skim Coats oder Monocouche.

7. Verwendung nach Anspruch 1 bis 5 in Fugenfüllern.

8. Verwendung nach Anspruch 6 oder 7 in Trockenmörtel-Rezepturen mit 5 bis 50 Gew.-% mineralischem Bindemittel, 5 bis 80 Gew.-% Füllstoff, 0.1 bis 10 Gew.-% Polymer, 0 bis 30 Gew.-% weitere Zusatzstoffe, wobei sich die Angaben in Gew.-% in der Rezeptur auf 100 Gew.-% aufaddieren.

9. Verwendung nach Anspruch 1 bis 8, wobei die Polymer-Zusammensetzung als in Wasser redispergierbares Pulver verwendet wird.

## Claims

1. Use of polymer compositions in the form of their aqueous dispersions or in the form of their water-redispersible powder for imparting water repellency to construction materials, comprising
a) a vinyl chloride-ethylene copolymer comprising up to 95% by weight of vinyl chloride units and 5% to 30% by weight of ethylene units, and
b) 5% to 30% by weight of one or more protective colloids, and also
c) in powder form, 5% to 30% by weight of one or more anti-blocking agents, and also,
if desired, further additives,
the amounts in % by weight being based on the total weight of the polymer powder composition and adding up in each case to 100% by weight.

2. Use according to Claim 1, **characterized in that** one or more protective colloids b) are present from the group consisting of partially hydrolysed polyvinyl alcohols having a degree of hydrolysis of 85 to 94 mol% and a Höppler viscosity, in 4% strength aqueous solution, at 3 to 15 mPas (Höppler method at 20°C, DIN 53015), and also partially or fully hydrolysed copolymers of vinyl acetate with isopropenyl acetate, having a degree of hydrolysis of 95 to 100 mol%.

3. Use according to Claims 1 to 2, **characterized in that** there are one or more further additives from the group consisting of d1) fatty acids and fatty acid derivatives which under alkaline conditions liberate fatty acid or the corresponding fatty acid anion, and d2) organosilicon compounds.

4. Use according to Claim 3, **characterized in that** as component d1) there are one or more fatty acid compounds from the group of fatty acids having 8 to 22 carbon atoms, their metal soaps, their amides, and their esters with monohydric alcohols having 1 to 14 carbon atoms, with glycol, with polyglycol, with polyalkylene glycol, with glycerol, with mono-, di- or triethanolamine or with monosaccharides.

5. Use according to Claim 3, **characterized in that** as component d2) there are one or more silicon compounds from the group of silicic esters, silanes, polysilanes, organosilanols and di-, oligo- and polysiloxanes.

6. Use according to Claims 1 to 5 in single-layer coatings such as skim coats or monocouche coatings.

7. Use according to Claims 1 to 5 in joint fillers.

8. Use according to Claim 6 or 7 in dry mortar formulations comprising 5% to 50% by weight of mineral binder, 5% to 80% by weight of filler, 0.1% to 10% by weight of polymer, and 0% to 30% by weight of further additives, the amounts in % by weight in the formulation adding up to 100% by weight.

9. Use according to Claims 1 to 8, wherein the polymer composition is used as a water-redispersible powder.

## Revendications

1. Utilisation de compositions polymères sous la forme de leur dispersion aqueuse ou sous la forme de leur poudre redispersible dans l'eau pour l'hydrophobisation de matériaux de construction, contenant
a) un copolymère de chlorure de vinyle - éthylène constitué de jusqu'à 95% en poids d'unités chlorure de vinyle et de 5 à 30% en poids d'unités éthylène,
b) de 5 à 30% en poids d'un ou plusieurs colloïdes protecteurs, ainsi que
c) sous forme de poudre, encore de 5 à 30% en poids d'un ou plusieurs agents antiblocage, et
le cas échéant d'autres additifs,
où les indications en % en poids se rapportent au poids total de la composition polymère en poudre et totalisent à chaque fois 100% en poids.

2. Utilisation suivant la revendication 1, **caractérisée en ce qu'**elle contient en tant que colloïde protecteur b) un ou plusieurs colloïdes du groupe comprenant des poly(alcools vinyliques) partiellement saponifiés, d'un degré d'hydrolyse de 85 à 94% molaires et d'une viscosité Höppler, en solution aqueuse à 4%, de 3 à 15 mPa.s (méthode selon Höppler à 20°C, DIN 53015), ainsi que des copolymères partiellement ou totalement saponifiés d'acétate de vinyle avec de l'acétate d'isopropényle d'un degré d'hydrolyse de 95 à 100% molaires.

3. Utilisation suivant la revendication 1 ou 2, **caractérisée en ce que** qu'elle contient en tant qu'autres additifs un ou plusieurs additifs du groupe comprenant d1) des acides gras et des dérivés d'acides gras qui, dans des conditions alcalines, libèrent un acide gras ou l'anion d'acide gras correspondant, et d2) des composés organosiliciques.

4. Utilisation suivant la revendication 3, **caractérisée en ce que** qu'elle contient en tant que composant d1) un ou plusieurs composés d'acides gras du groupe des acides gras comportant de 8 à 22 atomes de C, de leurs savons métalliques, de leurs amides, ainsi que de leurs esters avec des alcools monovalents comportant de 1 à 14 atomes de C, avec du glycol, avec du polyglycol, avec du polyalkylène glycol, avec du glycérol, avec une mono-, di- ou triéthanolamine, avec des monosaccharides.

5. Utilisation suivant la revendication 3, **caractérisée en ce que** qu'elle contient en tant que composant d2) un ou plusieurs composés de silicium du groupe des esters de l'acide silicique, des silanes, des polysilanes, des organosilanols, des di-, oligo- et polysiloxanes.

6. Utilisation suivant les revendications 1 à 5 dans des revêtements monocouches tels que par exemple des enduits et des monocouches.

7. Utilisation suivant les revendications 1 à 5 dans des produits de jointoiement.

8. Utilisation suivant la revendication 6 ou 7 dans des formulations de mortiers secs avec de 5 à 50% en poids de liant minéral, de 5 à 80% en poids de charge, de 0,1 à 10% en poids de polymère, de 0 à 30% en poids d'autres additifs, les indications de % en poids dans la formulation totalisant 100% en poids.

9. Utilisation suivant les revendications 1 à 8, où la composition polymère est utilisée en tant que poudre redispersible dans l'eau.
